# EUROPEAN PATENT SPECIFICATION

(11) **EP 3 592 582 B1**
(45) Date of publication and mention of the grant of the patent: **12.01.2022**
(21) Application number: 17709045.3
(22) Date of filing: 06.03.2017
(51) Int. Cl.: B60D 1/62, B60D 1/52

(54) **A TOWING HOOK ARRANGEMENT**
SCHLEPPHAKENANORDNUNG
DISPOSITIF DE CROCHET DE REMORQUAGE

(43) Date of publication of application: 15.01.2020
(73) Proprietor: Brink Towing Systems B.V., 7951 CX Staphorst (NL)
(72) Inventor: PAAIS, Raymond, 7944 PR Meppel (NL)
(74) Representative: Valea AB
(86) International application number: PCT/EP2017/055159
(87) International publication number: WO 2018/162028

(56) References cited:
- EP-A1- 1 293 363
- DE-U1-202007 007 313
- Anonymous: "Amazon.com: Rough Country - 70685 - Universal Hitch Mount Chrome Series LED Light Kit for Most Class I & II 3-inch Receiver Hitches: Automotive", , 1 March 2017 (2017-03-01), XP055426453, Retrieved from the Internet: URL:https://www.amazon.com/Rough-Country-U niversal-Receiver-Hitches/dp/B06XD1M7XK [retrieved on 2017-11-17]

## Description

### TECHNICAL FIELD

The present disclosure relates to a tow bar, a towing hook and a method for guiding a user when assembling a tow bar connectable component with a portion of a tow bar. A towing hook arrangement comprising a tow bar and a towing hook is also disclosed.

### BACKGROUND

Towing hook arrangements for towing e.g. trailers are commonly used today. In most of the cases a tow bar comprising a towing hook is mounted at the rear of a vehicle during the assembly process of the vehicle, although after sales mounting e.g. by an authorized garage is possible. Towing hook arrangements can generally be divided into three different categories. The first category is retractable towing hooks. For esthetical and practical reasons it may be desirable to have a towing hook which can be positioned between a towing position and a retracted position. The towing hooks in this category may thus be displaced between a towing position and a retracted position automatically or manually, but are not removed from the vehicle but simply retracted to a concealed position. A second category is fixed towing hooks. Fixed towing hooks cannot be removed without from the vehicle by the ordinary user, at least not without recertifying the towing hook installation again. These kind of towing hooks are generally welded or attached via screws and nuts in a permanent manner. A third category is detachable towing hooks. Detachable towing hooks are adapted to be detached and attached in a repeatable manner usually via some sort of lockable snap-in mechanism. The detached towing hook may be stowed away in the trunk of the vehicle when not in use for example. The present disclosure is especially advantageous for towing hook arrangements of the third category.

When a user assembles a detachable towing hook with the cooperating tow bar receiver, it is generally difficult for a user to see the mating portion of the tow bar. Tow bars are generally mounted at the rear of the vehicles in a transverse direction with respect to the vehicle. They are further often mounted behind the rear bumper, and are generally concealed from view for the ordinary vehicle user. It has been found that users trying to assemble detachable towing hooks with the tow bar generally find it difficult to mate the towing hook with the appropriate portion of the tow bar.

Document EP 1 293 363 A1 relates to a warning device for a trailer hitch and to a trailer hitch equipped with a warning device. The warning device has at least one sensor to report the locking position of the locking device. The sensor has an electricity supply or is connected to an external one. Visual and acoustic warning is given if the sensor detects that the locking device is not in the locking position when the headpiece is in the coupling holder.

### SUMMARY

It is thus an object of the present disclosure to provide a tow bar and a towing hook which can assist a user during assembly of a towing hook to a tow bar. The object is at least partly achieved by means of providing a tow bar according to claim 1. The object is at least partly achieved by a tow bar for a vehicle. The tow bar comprises a towing hook connection portion connectable with a towing hook. The tow bar further comprising at least one wave emitting device configured to emit a mechanical and/or electromagnetic wave upon activation for guiding a user during assembly of a tow bar connectable component with a portion of the tow bar.

The tow bar according to the present disclosure will provide a user with a tow bar having a guiding arrangement for guiding the mating of a tow bar connectable component such as a towing hook or a plug for a socket. The tow bar according to the present disclosure is versatile and can at relatively low cost simplify the assembly procedure for a user.

The wave emitting device may emit a wave which is projected directly onto the ground beneath the vehicle. The projected wave e.g. a laser beam may be used as reference when assembling the tow bar connectable component with a portion of the tow bar. Optionally the at least one wave emitting device may be adapted to project a wave via a wave reflective surface, such as a mirror. The tow bar may thus be provided with at least one mirror, i.e. a wave reflection device, to direct a wave from the at least one wave emitting device preferably to the ground or to a second wave reflection device. This may assist in position a wave emitting device in an appropriate position as the wave the wave emitting device emits may be directed via the wave reflection device in the desired direction and to the desired position.

It should be noted that by the term "a portion of the tow bar" is hereby meant any part which is associated with a tow bar and a towing hook such as a socket for a plug, a towing hook receiving portion of a tow bar, a non-towing accessory coupling.

The tow bar comprises a mechanical and/or electromagnetic wave receiving and/or reflecting device. As will be clear when reading the disclosure, the disclosure relates to a tow bar comprising at least one wave emitting device and a towing hook comprising at least one wave emitting device. The tow bar and the towing hook may be used together or as standalone units in towing hook arrangements. In order to improve the reception or reflection of a wave emitted from a tow bar and/or towing hook comprising at least one wave emitting device, the tow bar and/or towing hook may be provided with a dedicated surface for this purpose. Such dedicated surface may be formed by a wave receiving device such as a light sensor, or a wave reflection device such as a mirror.

The mechanical waves may be sound waves. It has been found that sound waves may be used to guide a user during assembly. Just as a matter of example, the wave emitting device may emit a "ping" to assist a user during assembly. In other words, the wave emitting device may emit pulses of sounds and detect the echoes. It may be advantageous in such an embodiment to have a dedicated sound reflecting surface on the towing hook.

The electromagnetic wave may be one or more waves selected from the list of; radio waves, microwaves, infrared radiation, visible light, radar, ultraviolet radiation, X-rays and gamma rays, laser. Just like sonar; the emitted wave may be reflected and detected in order to guide a user. It is also possible to simply emit electromagnetic waves e.g. a laser beam, and let the user be guided by the emitted electromagnetic wave. In this embodiment, the emitted electromagnetic wave is used for direct guiding a user.

The tow bar connectable component may be a detachable towing hook. The portion of the tow bar may be a towing hook receiving portion. It has been found that the wave emitting device is especially good for guiding a user when attaching a detachable towing hook to a towing receiving portion of the tow bar. This simplifies it for a user which otherwise may have difficulties in finding the towing hook receiving portion as it may be concealed behind the bumper of a vehicle. The assembly is further simplified in dark environments e.g. in the evening or at night when the lights are dim or absent.

The tow bar connectable component may be a plug and the portion of the tow bar may be a socket. Towable objects such as trailers are generally connected to the vehicles electrical system. To connect the trailer with the vehicle electrical system an electric plug may need to be connected to a socket e.g. for transferring data and/or current.

The wave emitting device may be operatively connected to, and arranged to be activated by, a light sensor, sound sensor, motion sensor, button or similar manual electronic switch, remote control, accelerometer, knocking sensor, mobile communication device. The activation may be performed via direct connection or via an electronic control unit. Just as a matter of example, the tow bar, or a portion of the towing hook such as the ball portion may be provided with a sensor such as a RFID sensor. The sensor may be adapted to cooperate with a sensor/emitter on a towable object for example, hence e.g. activated when the towable object is within range e.g. within 1 m or a pre-determined distance.

The wave emitting device may be arranged to emit a visible light having a selected pattern, the selected pattern preferably being one or more selected from the list of; polygonal shape such as a triangle, square, rectangle, pentagon, hexagon or the like, an arrow, a shape representing a plug, a circle such as a filled circle or ring, a line, or combinations thereof. The selected pattern may be used to further assist a user during assembly. Just as a matter of example, the patterns may change when the user is within a selected range with the towing hook. In an embodiment, the pattern may change as the towing enters the towing hook receiving portion and/or when the towing hook is attached to the tow bar. This will provide a confirmation of the progress during the assembly and also a confirmation of if and when the towing hook is attached to the tow bar.

The selected pattern may be selected so as to correspond to a shape or pattern on the tow bar connectable component. By having corresponding patterns, it may be easier for the user to align the wave emitted by the wave emitting device with a reference point of the tow bar connectable component.

The tow bar may comprise one or more wave emitting devices such as at least a first and a second wave emitting device, optionally three or more wave emitting devices. One wave emitting device may be dedicated to the assembly of a towing hook with the towing hook receiving portion of the tow bar, while a second wave emitting device may be dedicated to the assembly of a secondary component such as a plug, or any other suitable component.

The first wave emitting device may be arranged to emit a visible light having a first selected pattern, and the second wave emitting device may be arranged to emit a visible light having a second selected pattern. The first and the second selected patterns may be different from each other in terms of shape, size and/or color. By this a user may easily differentiate between the first and the second wave emitting devices and their associated functions and positions. At least one wave emitting device may thus be arranged to emit light within the visible spectrum, e.g. having wavelengths from about 390 to 700 nm.

The wave emitting device may be operatively connected with an electronic control unit. By incorporation of an electronic control unit, added functions may be gained such as timer functions, communication functions. The on/off, i.e. activation or deactivation of the at least one wave emitting device may be governed in an efficient manner. The electronic control unit may be arranged to control the time which the wave emitting device is active. Optionally a communication unit may be arranged to the electronic control unit.

It is also an objective of the present disclosure to provide a towing hook for a tow bar. The towing hook comprises tow bar connection portion connectable with a tow bar and a trailer connection portion connectable with a trailer and/or a trailer accessory. The towing hook comprises at least one wave emitting device configured to emit a mechanical and/or electromagnetic wave upon activation for guiding a user during assembly of the towing hook with a portion of a tow bar for a vehicle.

It is also an objective of the present disclosure to provide a towing hook arrangement comprising a tow bar and a towing hook as disclosed herein.

It is also an objective of the present disclosure to provide a method for guiding a user during assembly of a tow bar connectable component with a portion of a tow bar for a vehicle. The method comprising the steps of emitting a mechanical and/or electromagnetic wave via a wave emitting device and using the emitted mechanical and/or electromagnetic wave to guide the tow bar connectable component to the portion of the tow bar.

The method according to the present disclosure will provide an efficient way of guiding a user when mating of a tow bar connectable component such as a towing hook or a plug for a socket with a tow bar. The method tow bar according to the present disclosure is versatile and can at relatively low cost simplify the assembly procedure for a user.

The tow bar connectable component may be a towing hook and/or a plug.

The wave emitting device may be activated by an input signal from a light sensor, sound sensor, motion sensor, button or similar manual electronic switch, remote control, accelerometer, knocking sensor, mobile communication device, or combinations thereof.

The wave emitting device may be deactivated after the towing bar connectable component has mated with the tow bar. This provides an energy and wear saving function. To save energy the at least one wave emitting device may be deactivated after a selected period of time such as 1, 2, 3, 4, 5 or more minutes.

The wave emitting device may be arranged to indicate when the tow bar connectable component is mated with the tow bar, preferably when mated in a correct manner. Such indication may be emitting a selected pattern or sequence of if pulses or the like. Optionally or additionally a sound signal may be emitted. The wave emitting device may be arranged to indicate if the tow bar connectable component is incorrectly mated. Such indication may be emitting a selected pattern or sequence of if pulses or the like. Optionally or additionally a sound signal may be emitted.

### BRIEF DESCRIPTION OF THE DRAWINGS

Non-limiting embodiments of the present invention will be described in greater detail with reference to the accompanying figures in which;
figure 1 shows a portion of a vehicle, portions of a towing hook arrangement comprising a tow bar and a detachable towing hook;
figure 2 shows the towing hook arrangement of figure 1 with a first and a second wave emitting device in an activated state;
figure 3 shows the hook arrangement of figure 1 with a view from behind and with a first and a second wave emitting device in an activated state;
figure 4 shows the hook arrangement of figure 1 without the portion of the vehicle and with a view in perspective, and with the first and the second wave emitting device in an activated state;
figure 5 shows the hook arrangement of figure 1 without the portion of the vehicle and with a partly exploded and transparent view in perspective, and with the first and the second wave emitting device in an activated state;
figure 6 shows a towing hook comprising a wave emitting device in an activated state; figure 7 shows a portion of a vehicle, portions of a towing hook arrangement comprising a tow bar and a detachable towing hook before assembly of the towing hook with the tow bar illustrating how a beam of visible light may be used to guide the user during assembly; figure 8a shows portions of the towing hook arrangement of figure 7 before assembly and; figure 8b shows portions of the towing hook arrangement of figure 7 after assembly.

### DETAILED DESCRIPTION OF PREFERRED EMBODIMENTS

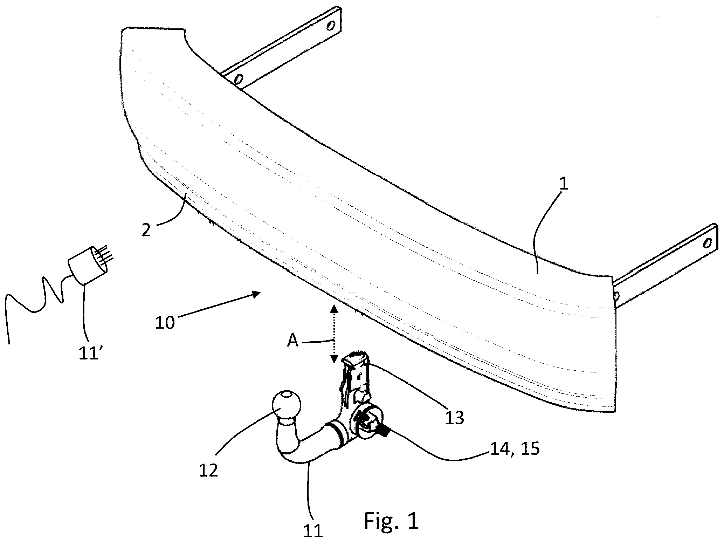

Figure 1 shows parts of a vehicle 1 and a towing hook arrangement 10 comprising a towing hook 11 and a tow bar (not shown). The vehicle 1 is illustrated with parts of the rear of the vehicle 1 and specifically a bumper 2. The towing hook 11, in the shown non-limiting embodiment, can be attached to an operable position in which it is connected to the vehicle such that a towable object may be connected to the towing hook 11, and a detached position in which the towing hook 11 can be stowed away e.g. in the trunk of the vehicle 1. Figure 1 shows the towing hook 11 in a detached position, i.e. not connected to the tow bar (not shown) of the towing hook arrangement 10.

The towing hook 11 comprises a ball portion 12 adapted to be connected with the towable object. The size of the ball portion 12 can be selected to have different diameters but is in a preferred embodiment 50.8 mm (two inches) or 50 mm in diameter. The towing hook 11 further comprises a connection portion 13 adapted to mate with a towing hook receiving portion (not shown) of the tow bar (not shown). The towing hook 11 is attached or detached by displacing the towing hook 11 in a direction as indicated by the arrow A. The towing hook 11 in the shown embodiment comprises a lock mechanism 14 operable via a knob 15 to secure the position of the towing hook 11 in the attached position. Although a towing hook is disclosed in the non-limiting embodiments herein it should be noted that other components may be associated or mated with the tow bar. Hence the present disclosure may be applied on any tow bar connectable component, i.e. components which can be mated with a receiving portion of a tow bar or an associated portion to the tow bar. Also shown in figure 1 is a tow bar connectable component in the form of a plug 11', in this case an electric plug representing an electric plug from e.g. a trailer or caravan or the like.

Examples of tow bar connectable components are towing hooks, plugs such as electric plugs, adapters, non-towing (hybrid) hooks. Non-towing hooks are specifically adapted to carry an object e.g. a bike carrier but are not adapted to tow a trailer as they are not strong enough or certified for that purpose. Usually the carried object is fixed to the non-towing hook.

The towable object could be any towable object which is specifically adapted to be mounted on a towing hook or an equivalent component such as a hybrid hook. A hybrid hook has the looks of a towing hook but is not adapted to tow an object such as a trailer. Towable objects can generally be divided into two sub categories. Firstly; pivotable towable objects such as a trailer, a caravan, a boat trailer, a cargo trailer, or similar. Pivotable towable objects rely on the towing hook to pull or push the pivotable towable object, while the pivotable towable object itself generally tends to have at least one ground supporting member such as wheels or skies or the like. The towing hook does not carry the full weight of a pivotable towable object. A pivotable towable object is further enabled to pivot about the towing hook and is thus relying on the mobility of the connection to the towing hook in order to be towed in a safe and convenient manner. Secondly; the towable object can be a carried accessory such as a bike carrier, a luggage carrier, a towing hook protection member or the like. A carried accessory is generally fixed to the towing hook and rely on that the towing hook, or the equivalent component, is carrying the full weight of the towing hook accessory. Although some load relief may sometimes be provided by the vehicle itself, a carried accessory does not have ground supporting members such as wheels or skies or the like.

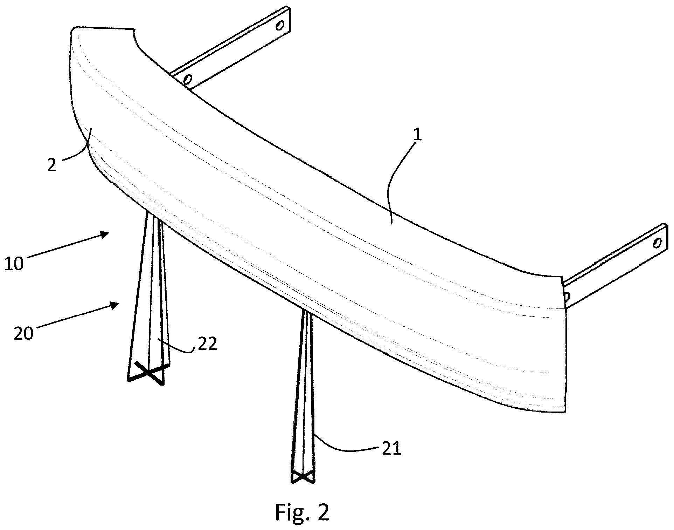

**Figure 2** shows the towing hook arrangement 10 but without the towing hook. The towing hook arrangement 10 comprises a guiding arrangement 20. The guiding arrangement 20 is adapted to guide a user when assembling the towing hook (not shown) with the tow bar. A first and a second laser 21, 22 are further illustrated. The first laser beam 21 is directed towards the ground and provides a marking for a towing hook which can assist a user during insertion of the towing hook 11. The second laser beam 22 provides a second mark on the ground and serves the purpose of indicating for the user where to find e.g. a socket for a plug. The purpose of the first and the second laser beams 21, 22 are thus to guide a user when docking the towing hook 11 or a plug to a socket arranged on the tow bar as will be described in greater detail below. It should be noted that other means than laser beams maybe used to guide a user.

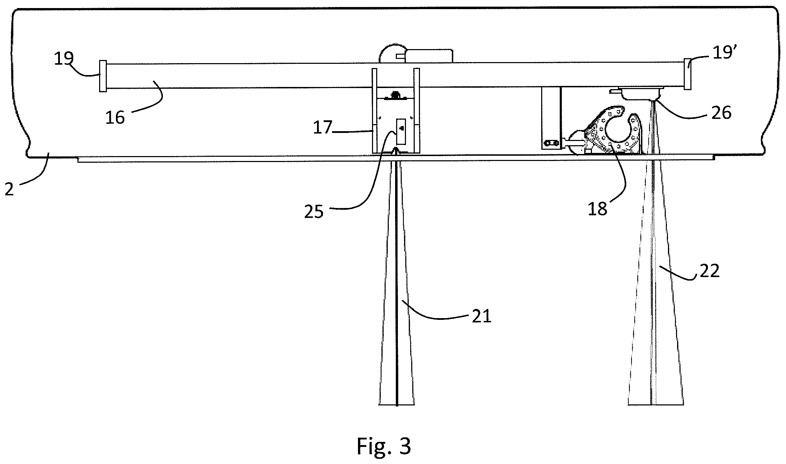

**Figure 3** shows the towing hook arrangement 10 with a view from behind. Figure 3 shows the tow bar 16, a towing hook receiving portion 17, a socket 18, a first and a second vehicle connection portion 19, 19'. Figure 3 further shows the guiding arrangement 20 and the first and the second laser beams 21, 22. The first and the second vehicle connection portion 19, 19' are adapted to attach the tow bar 16 to the vehicle 1 (not shown in figure 3). The first and the second vehicle connection portion 19, 19' are in the shown embodiment formed by a first and a second bracket, in this case steel brackets. Just as a matter of example, the first and the second vehicle connection portions 19, 19' may be attached to the vehicle by welding and/or screws. The vehicle connection portions 19, 19' of the tow bar 16 can be adapted to fit substantially any vehicle, in the shown embodiment; the first and the second vehicle connection portion 19, 19' are adapted to be mounted to the chassis of a car, such as a SUV.

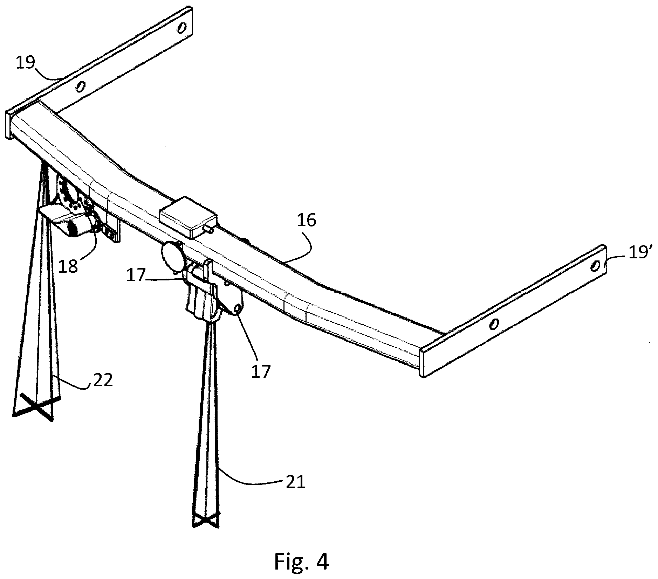

**Figure 4** shows the tow bar 16 with a view in perspective. Figure 4 shows the towing hook arrangement 10, the tow bar 16, the towing hook receiving portion 17, the socket 18, the first and the second vehicle connection portion 19, 19'. Figure 4 further shows the guiding arrangement 20 and the first and the second laser beams 21, 22.

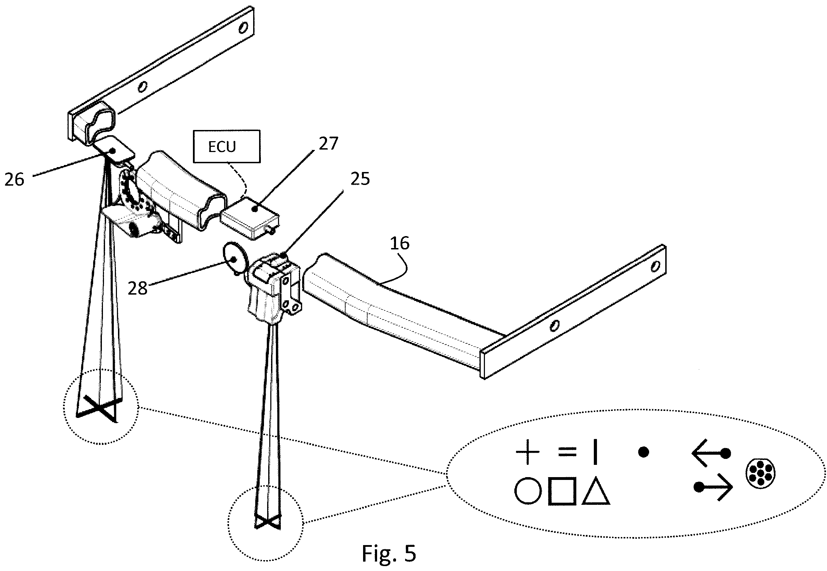

**Figure 5** shows the tow bar 16 in an exploded view and with portions of the tow bar 16 transparent for the purpose of clarity. The tow bar 16 in the shown embodiment comprises a wave emitting device, in this case a first and a second laser emitter 25, 26, a battery unit 27 and a sensor 28. In the shown embodiment, the battery unit 27 supplies the first and the second laser emitter 25, 26 with energy. It should be noted that as an option to a battery unit to supply units on the tow bar with energy, a vehicle connection device may be used to connect energy consuming units to the vehicles energy supply system. An electronic control unit ECU controls the on/off function of the first and the second laser emitter 25, 26. It should be noted that the sensor 28 may be connected directly to the first and the second laser emitter 25, 26 such that of the sensor 28 is triggered, the first and the second laser emitter 25, 26 are activated directly.

A wave emitting device disclosed herein is an emitting device adapted to emit mechanical and/or electromagnetic waves. Mechanical waves are herein waves which propagate through a medium and temporarily deforming the medium during such propagation. Sound waves are an example of mechanical waves which may propagate through e.g. air due to colliding air molecules. Electromagnetic waves are different in nature as they do not require a medium to travel. Examples of electromagnetic waves include microwaves, laser, radio waves, visible light, ultraviolet radiation, infrared radiation, X-rays and gamma rays. Electromagnetic waves are generally considered to be generated by oscillations of magnetic and electrical fields derived from charged particles. As such electromagnetic waves can travel through vacuum.

The sensor 28 is adapted to respond to an input signal such as a user input signal. In the shown embodiment, the sensor 28 is a sound sensor in the form of a piezo element. A sound sensor, such as the sensor 28, can be used to provide a response signal on the sound of a knock, i.e. a user knocking on the vehicle in the proximity of the sensor 28. The sensor 28, in this case the piezo element, can be manipulated to detect sound, and to respond when the sound is above a selected threshold level. If the sensor 28 detects a sound above the selected threshold level, the sensor 28 will send a signal to the electronic control unit ECU. The ECU will upon receiving a signal from the sensor 28 issue a command to the first and the second laser emitter 25, 26 to activate. Figures 2-5 illustrates the laser beams 21, 22 from the first and the second laser emitter 25, 26 after the first and the second laser emitter 25, 26 has been activated. Optionally, as mentioned above, the sensor 28 may be operatively connected directly to the at least one wave emitting device.

The ECU may be used to control the on/off of at least one wave emitting device, such as two or more wave emitting devices. The ECU may further be used to control other properties of functions such as; the time during which the wave emitting device is active. Just as a matter of example, the wave emitting device may be time operated such that after activation, the wave emitting device is active for a limited amount of time, such as 2, 3, 4, or 5 minutes, where after it is deactivated. The ECU may thus provide a timer function. The ECU may further be configured to activate or deactivate the at least one wave emitting device in an intermittent pattern, providing blinking laser light for example. The ECU may further be operatively connected with the vehicle communication system, or an independent communication system. The ECU may thus be configured to communicate data such as status of the wave emitting device such as on or off, run time, time until service or the like. The ECU also enables the wave emitting device to be operated remotely e.g. via a mobile communication device such as mobile phone or via the vehicle systems. A communication unit for this purpose may thus be provided. The ECU may have an integrated communication unit for example. In an embodiment, the ECU may be a mobile phone processor operatively connected with the communication unit of a mobile phone, preferably the ECU is a mobile phone. The ECU may be operatively connected to a controller area network, a CAN bus system, for a vehicle.

The sensor 28 can one or more sensors selected from the list of; light sensor, sound sensor, motion sensor, button or similar manual electronic switch, remote control, accelerometer, knocking sensor, or combinations thereof. Just as a matter of example, if the sensor 28 is a motion sensor, the motion sensor can be directed downwards with in a similar manner as the first and the second laser beam 21, 22. A user may simply sweep his/her foot beneath the sensor to activate the first and the second laser emitter 25, 26. The sensor 28 may optionally or additionally be activated via a whistle or by clapping hands, or be based on "key finder technology". As is understood, the sensor 28 represents also the possibility of having at least two sensors. The at least two sensor may be the same sensor of an increased sensing capacity or different sensors for an increased sensing variety. Hence the first and the second laser emitter 25, 26 may be activated by one or more actions.

The first and the second laser emitter 25, 26 may be adapted to project substantially any pattern on the ground beneath the vehicle. In the shown embodiment, the first and the second laser emitter 25, 26 emit a laser beam forming a cross pattern on the ground. Further illustrated in figure 5 are other optional patterns which may be as an alternative to the cross pattern. Figure 5 illustrates optional patterns in the form of a circle, a square, a triangle, a plus, a line, an equal symbol, a dot, arrows pointing in different directions, and a pattern illustrating a socket for a plug.

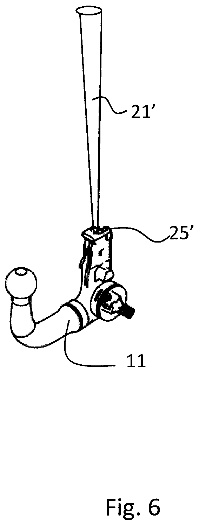

**Figure 6** shows a towing hook 11. The towing hook 11 comprises a laser emitter 25' adapted to project a laser beam 21'. The pattern of the laser beam 21' in in the shown embodiment a circle. It should be noted of course that any suitable pattern may be used. The towing hook 11 thus comprises at least one wave emitting device, such as two wave emitting devices, adapted to guide a user during assembly of the towing hook 11 with the tow bar (not shown). The wave emitting device of the towing hook may be activated e.g. via a button on the towing hook 11. It should be noted that the towing hook 11 disclosed with reference to figure 6 may be used separately or together with a tow bar disclosed herein.

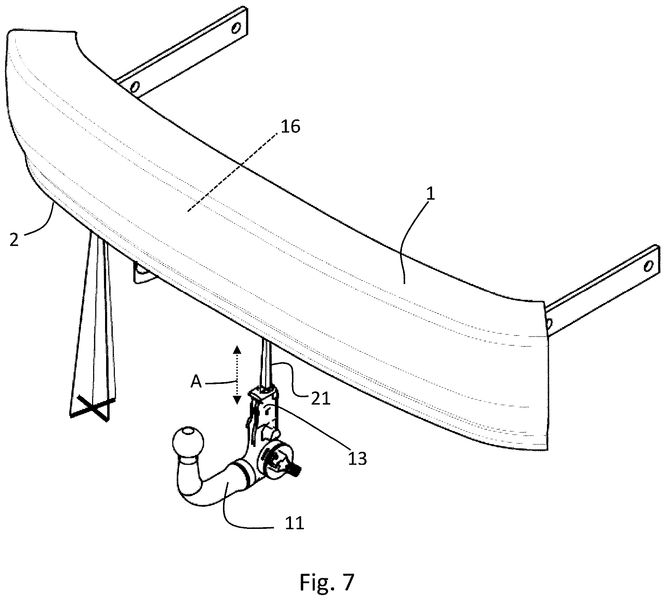

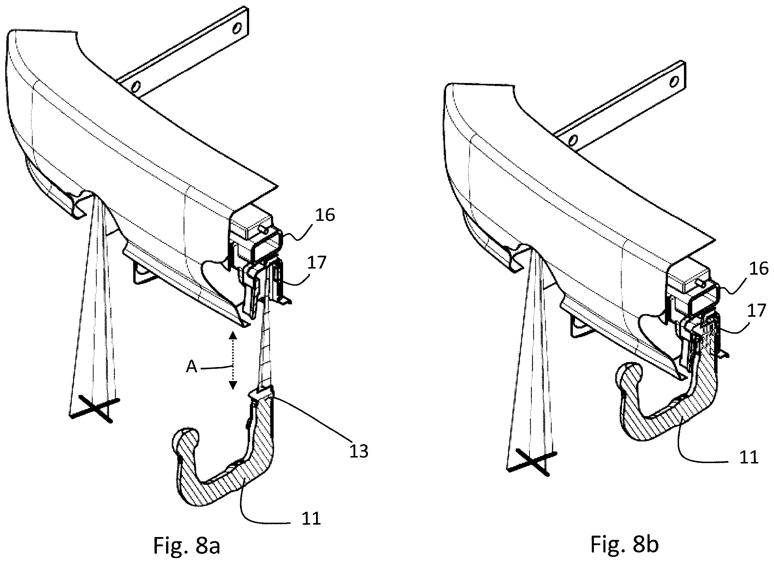

With reference to **figure 7** and **figures 8a****-8b,** the function of the operation of the tow bar and a towing hook according to the disclosure will be described in greater detail. Figure 7 and figure 8a shows the towing hook arrangement 10 of figure 1 comprising the towing hook 11 before being mated with the towing hook receiving portion 17 of the tow bar 16. Figure 8b shows the towing hook 11 after being mated with the tow bar 17. Figures 8a-8b are shown with a cross sectional view to better illustrate the mating of the towing hook 11 with towing hook receiving portion 17 of the tow bar 16. The insertion and retraction direction is indicated with the arrow A. The first laser emitter 25 emits the laser beam 21 onto the ground below the vehicle 1. A user may use the emitted laser beam 21 to guide the towing hook 11 to the towing hook receiving portion 17.

In the shown embodiment, the first laser emitter 25 is positioned and directed such that the laser beam 21 should be aimed on the connection portion 13 of the towing hook 11. The user may thus simply keep the laser beam 21 on the top of the connection portion 13 in order to have the connection portion 13 inserted and mated with the towing hook receiving portion 17 of the tow bar 16. It should be noted that substantially any surface on the towing hook 11 may be used a reference point as long as the laser emitter is calibrated accordingly. The wave emitting device may be positioned such that the wave directs a user to the desired positon, or the wave may be mirrored such that the wave directs a user to the desired positon.

Disclosed herein is also a method for guiding a user during assembly of a tow bar connectable component with a portion of a tow bar for a vehicle. The method comprising the steps of; emitting a mechanical and/or electromagnetic wave via a wave emitting device and using the emitted mechanical and/or electromagnetic wave to guide the tow bar connectable component to the portion of the tow bar.

The first and/or the second laser emitter 25, 26 can be replaced or complemented by another guiding means such as another lighter emitter, radar emitter, sound emitter or the like. The wave emitting device, in the shown embodiment at least the first laser emitter, may be activated using the unlock button on the vehicle key, e.g. by pressing press twice, via a mobile communication device such as a cell phone. When using a mobile communication device the communication protocol may be blue tooth, wi-fi, 3G, 4G or 5G cellular network or the like. Activation through active wires in socket may optionally be used, e.g. via the indicator wires.

In addition, a lamp, e.g. a LED, may be activated simultaneously to light up underneath the vehicle. The tow bar may thus be provided with a sensor activated light.

## Claims

1. A tow bar for a vehicle, said tow bar (16) comprising a towing hook connection portion (17) connectable with a towing hook (11), comprising at least one wave emitting device (25, 26) ,**characterized in that** said wave emitting device (25, 26) is configured to emit a mechanical and/or electromagnetic wave upon activation for guiding a user to find a portion of said tow bar (16), such as a socket (18) for a plug, a towing hook receiving portion (17), or a non-towing accessory coupling, during assembly of a tow bar connectable component (11, 11'), such as the towing hook (11), an adapter, a non-towing hook, or a plug (11') e.g. an electric plug, with said portion of said tow bar (16).

2. The tow bar (16) according to claim 1, wherein said tow bar (16) comprises a mechanical and/or electromagnetic wave receiving and/or reflecting device.

3. The tow bar according to claim 1 or 2, wherein said mechanical waves are sound waves.

4. The tow bar according to any one of the preceding claims, wherein said electromagnetic wave is one or more waves selected from the list of; radio waves, microwaves, infrared radiation, visible light, radar, ultraviolet radiation, X-rays and gamma rays, laser.

5. The tow bar according to any one of the preceding claims, wherein said tow bar connectable component is a detachable towing hook (11) and said portion of said tow bar (16) is a towing hook receiving portion (17).

6. The tow bar according to any one of the preceding claims, wherein said tow bar connectable component is a plug (11') and said portion of said tow bar (16) is a socket (18).

7. The tow bar according to any one of the preceding claims, wherein said wave emitting device (25, 26) is operatively connected to, and arranged to be activated by, a light sensor, sound sensor, motion sensor, button or similar manual electronic switch, remote control, accelerometer, knocking sensor, mobile communication device.

8. The tow bar according to any one of the preceding claims, wherein said wave emitting device (25, 26) is arranged to emit a visible light having a selected pattern, said selected pattern preferably being one or more selected from the list of; polygonal shape such as a triangle, square, rectangle, pentagon, hexagon or the like, an arrow, a shape representing a plug, a circle such as a filled circle or ring, a line, or combinations thereof.

9. The tow bar (16) according to claim 8, wherein said selected pattern is selected so as to correspond to a shape or pattern on said tow bar connectable component (11,11').

10. The tow bar according to any one of the preceding claims, wherein said tow bar (16) comprises at least a first and a second wave emitting device (25, 26).

11. The tow bar (16) according to claim 10, wherein said first wave emitting device (25) is arranged to emit a visible light having a first selected pattern, and said second wave emitting device (26) is arranged to emit a visible light having a second selected pattern, wherein said first and said second selected patterns are different from each other in terms of shape, size and/or colour.

12. The tow bar (16) according to any one of the preceding claims, wherein said wave emitting device (25, 26) is operatively connected with an electronic control unit (ECU).

13. The tow bar (16) according to claim 12, wherein said electronic control unit (ECU) is arranged to control the time which said at least one wave emitting device (25, 26) is active.

14. A towing hook (11) for a tow bar (16), said towing hook (11) comprising tow bar connection portion (13) connectable with a tow bar (16) and a towable object connection portion (12) connectable with a towable object, wherein said towing hook (11) comprises at least one wave emitting device (25') ,**characterized in that** said wave emitting device (25') is configured to emit a mechanical and/or electromagnetic wave upon activation for guiding a user to find a towing hook receiving portion (17) of said tow bar (16) during assembly of said towing hook (11) with said portion of said tow bar (16), said at least one wave emitting device (25') being a laser emitter adapted to project a laser beam (21').

15. A method for guiding a user to find a portion of a tow bar (16), such as a socket (18) for a plug, a towing hook receiving portion (17), or a non-towing accessory coupling, during assembly of a tow bar connectable component (11, 11'), such as a towing hook (11), an adapter, a non-towing hook, or a plug (11') e.g. an electric plug, with said portion of a tow bar (16) for a vehicle, comprising the steps of;
a) emitting a mechanical and/or electromagnetic wave via a wave emitting device (25, 26, 25'), said at least one wave emitting device (25, 26) being comprised in said tow bar (16), and;
b) using said emitted mechanical and/or electromagnetic wave to guide said tow bar connectable component (11, 11') to said portion of said tow bar (16).

16. The method according to claim 15, whereby said tow bar connectable component (11, 11') is a towing hook (11) and/or a plug (11').

17. The method according to any one of the claims 15-16, whereby said wave emitting device (25, 26, 25') is activated by an input signal from a light sensor, sound sensor, motion sensor, button or similar manual electronic switch, remote control, accelerometer, knocking sensor, mobile communication device, or combinations thereof.

18. The method according to any one of the claims 15-17, whereby said wave emitting device (25, 26) is deactivated after said tow bar connectable component (11, 11') has mated with said tow bar (16).

19. The method according to any one of the claims 15-18, whereby said wave emitting device (25, 26, 25') is arranged to indicate when said tow bar connectable component (11, 11') is mated with said tow bar (16).

20. The method according to any one of the claims 15-19, whereby said wave emitting device (25, 26, 25') is arranged to indicate if said tow bar connectable component (11, 11') is incorrectly mated.

## Patentansprüche

1. Abschleppstange für ein Fahrzeug, wobei die Abschleppstange (16) einen Abschlepphakenverbindungsabschnitt (17) umfasst, der mit einem Abschlepphaken (11) verbindbar ist, die wenigstens eine Wellen emittierende Vorrichtung (25, 26) umfasst, **dadurch gekennzeichnet, dass** die Wellen emittierende Vorrichtung (25, 26) konfiguriert ist, um bei einer Aktivierung eine mechanische und/oder elektromagnetische Welle zum Führen eines Benutzers zu emittieren, um einen Abschnitt der Abschleppstange (16), wie etwa eine Buchse (18) für einen Stecker, einen Abschlepphakenaufnahmeabschnitt (17) oder eine nichtziehende Zubehörkupplung, während eines Zusammenbaus einer Komponente (11, 11'), die mit der Abschleppstange verbindbar ist, wie etwa der Abschlepphaken (11), ein Adapter, ein nichtziehender Haken oder ein Stecker (11'), z. B. ein elektrischer Stecker, mit dem Abschnitt der Abschleppstange (16) zu finden.

2. Abschleppstange (16) nach Anspruch 1, wobei die Abschleppstange (16) eine mechanische und/oder elektromagnetische Wellen empfangende und/oder reflektierende Vorrichtung umfasst.

3. Abschleppstange nach Anspruch 1 oder 2, wobei die mechanischen Wellen Schallwellen sind.

4. Abschleppstange nach einem der vorhergehenden Ansprüche, wobei die elektromagnetische Welle eine oder mehrere Wellen sind, die aus der Liste von Folgenden ausgewählt sind; Funkwellen, Mikrowellen, Infrarotstrahlung, sichtbarem Licht, Radar, Ultraviolettstrahlung, Röntgenstrahlen und Gammastrahlen, Laser.

5. Abschleppstange nach einem der vorhergehenden Ansprüche, wobei die Komponente, die mit der Abschleppstange verbindbar ist, ein abnehmbarer Abschlepphaken (11) ist und der Abschnitt der Abschleppstange (16) ein Abschlepphakenaufnahmeabschnitt (17) ist.

6. Abschleppstange nach einem der vorhergehenden Ansprüche, wobei die Komponente, die mit der Abschleppstange verbindbar ist, ein Stecker (11') ist und der Abschnitt der Abschleppstange (16) eine Buchse (18) ist.

7. Abschleppstange nach einem der vorhergehenden Ansprüche, wobei die Wellen emittierende Vorrichtung (25, 26) mit einem Lichtsensor, einem Schallsensor, einem Bewegungssensor, einem Knopf oder einem ähnlichen manuellen elektronischen Schalter, einer Fernsteuerung, einem Beschleunigungsmesser, einem Klopfsensor, einer mobilen Kommunikationsvorrichtung wirkverbunden und eingerichtet ist, um durch diese(n) aktiviert zu werden.

8. Abschleppstange nach einem der vorhergehenden Ansprüche, wobei die Wellen emittierende Vorrichtung (25, 26) eingerichtet ist, um ein sichtbares Licht zu emittieren, das ein ausgewähltes Muster aufweist, wobei das ausgewählte Muster vorzugsweise wenigstens eines aus der Liste von Folgenden ist; polygonale Form wie etwa ein Dreieck, ein Quadrat, ein Rechteck, ein Fünfeck, ein Sechseck oder dergleichen, ein Pfeil, eine Form, die einen Stecker darstellt, ein Kreis wie etwa ein ausgefüllter Kreis oder Ring, eine Linie oder Kombinationen davon.

9. Abschleppstange (16) nach Anspruch 8, wobei das ausgewählte Muster ausgewählt ist, sodass es einer Form oder einem Muster auf der Komponente (11, 11'), die mit der Abschleppstange verbindbar ist, entspricht.

10. Abschleppstange nach einem der vorhergehenden Ansprüche, wobei die Abschleppstange (16) wenigstens eine erste und eine zweite Wellen emittierende Vorrichtung (25, 26) umfasst.

11. Abschleppstange (16) nach Anspruch 10, wobei die erste Wellen emittierende Vorrichtung (25) eingerichtet ist, um ein sichtbares Licht zu emittieren, das ein erstes ausgewähltes Muster aufweist, und die zweite Wellen emittierende Vorrichtung (26) eingerichtet ist, um ein sichtbares Licht zu emittieren, das ein zweites ausgewähltes Muster aufweist, wobei sich das erste und das zweite ausgewählte Muster hinsichtlich Form, Größe und/oder Farbe voneinander unterscheiden.

12. Abschleppstange (16) nach einem der vorhergehenden Ansprüche, wobei die Wellen emittierende Vorrichtung (25, 26) mit einer elektronischen Steuereinheit (electronic control unit - ECU) wirkverbunden ist.

13. Abschleppstange (16) nach Anspruch 12, wobei die elektronische Steuereinheit (ECU) eingerichtet ist, um die Zeit zu steuern, die die wenigstens eine Wellen emittierende Vorrichtung (25, 26) aktiv ist.

14. Abschlepphaken (11) für eine Abschleppstange (16), wobei der Abschlepphaken (11) einen Abschleppstangenverbindungsabschnitt (13), der mit einer Abschleppstange (16) verbindbar ist, und einen Schleppbares-Objekt-Verbindungsabschnitt (12) umfasst, der mit einem schleppbaren Objekt verbindbar ist, wobei der Abschlepphaken (11) wenigstens eine Wellen emittierende Vorrichtung (25') umfasst, **dadurch gekennzeichnet, dass** die Wellen emittierende Vorrichtung (25') konfiguriert ist, um bei der Aktivierung eine mechanische und/oder elektromagnetische Welle zum Führen eines Benutzers zu emittieren, um einen Abschlepphakenaufnahmeabschnitt (17) der Abschleppstange (16) während des Zusammenbaus des Abschlepphakens (11) mit dem Abschnitt der Abschleppstange (16) zu finden, wobei die wenigstens eine Wellen emittierende Vorrichtung (25') ein Laseremitter ist, der angepasst ist, um einen Laserstrahl (21') zu projizieren.

15. Verfahren zum Führen eines Benutzers, um einen Abschnitt einer Abschleppstange (16), wie etwa eine Buchse (18) für einen Stecker, einen Abschlepphakenaufnahmeabschnitt (17) oder eine nichtziehende Zubehörkupplung während des Zusammenbaus einer Komponente (11, 11'), die mit der Abschleppstange verbindbar ist, wie etwa ein Abschlepphaken (11), ein Adapter, ein nichtziehender Haken oder ein Stecker (11'), z. B. ein elektrischer Stecker, mit dem Abschnitt einer Abschleppstange (16) für ein Fahrzeug zu finden, das die folgenden Schritte umfasst;
a) Emittieren einer mechanischen und/oder elektromagnetischen Welle über eine Wellen emittierende Vorrichtung (25, 26, 25'), wobei die wenigstens eine Wellen emittierende Vorrichtung (25, 26) in der Abschleppstange (16) enthalten ist, und;
b) Verwenden der emittierten mechanischen und/oder elektromagnetischen Welle, um die Komponente (11, 11'), die mit der Abschleppstange verbindbar ist, zu dem Abschnitt der Abschleppstange (16) zu führen.

16. Verfahren nach Anspruch 15, wodurch die Komponente (11, 11'), die mit der Abschleppstange verbindbar ist, ein Abschlepphaken (11) und/oder ein Stecker (11') ist.

17. Verfahren nach einem der Ansprüche 15-16, wodurch die Wellen emittierende Vorrichtung (25, 26, 25') durch ein Eingangssignal von einem Lichtsensor, einem Schallsensor, einem Bewegungssensor, einem Knopf oder einem ähnlichen manuellen elektronischen Schalter, einer Fernsteuerung, einem Beschleunigungsmesser, einem Klopfsensor, einer mobilen Kommunikationsvorrichtung oder Kombinationen davon aktiviert wird.

18. Verfahren nach einem der Ansprüche 15-17, wodurch die Wellen emittierende Vorrichtung (25, 26) deaktiviert wird, nachdem die Komponente (11, 11'), die mit der Abschleppstange verbindbar ist, mit der Abschleppstange (16) gepaart worden ist.

19. Verfahren nach einem der Ansprüche 15-18, wodurch die Wellen emittierende Vorrichtung (25, 26, 25') eingerichtet ist, um anzuzeigen, wenn die Komponente (11, 11'), die mit der Abschleppstange verbindbar ist, mit der Abschleppstange (16) gepaart ist.

20. Verfahren nach einem der Ansprüche 15-19, wodurch die Wellen emittierende Vorrichtung (25, 26, 25') eingerichtet ist, um anzuzeigen, ob die Komponente (11, 11'), die mit der Abschleppstange verbindbar ist, falsch gepaart ist.

## Revendications

1. Barre de remorquage pour un véhicule, ladite barre de remorquage (16) comprenant une partie de connexion de crochet de remorquage (17) pouvant être raccordée à un crochet de remorquage (11), comprenant au moins un dispositif émetteur d'ondes (25, 26), **caractérisée en ce que** ledit dispositif émetteur d'ondes (25, 26) est configuré pour émettre une onde mécanique et/ou électromagnétique lors de l'activation pour guider un utilisateur à trouver une partie de ladite barre de remorquage (16), telle qu'une douille (18) pour une fiche, un partie de réception de crochet de remorquage (17), ou un accouplement d'accessoire non remorquable, lors de l'assemblage d'un composant pouvant être raccordé à une barre de remorquage (11, 11'), tel que le crochet de remorquage (11), un adaptateur, un crochet non remorquable ou une fiche (11') par exemple une fiche électrique, avec ladite partie de ladite barre de remorquage (16).

2. Barre de remorquage (16) selon la revendication 1, dans laquelle ladite barre de remorquage (16) comprend un dispositif de réception et/ou de réflexion d'ondes mécaniques et/ou électromagnétiques.

3. Barre de remorquage selon la revendication 1 ou 2, dans laquelle lesdites ondes mécaniques sont des ondes sonores.

4. Barre de remorquage selon l'une quelconque des revendications précédentes, dans laquelle ladite onde électromagnétique est une ou plusieurs ondes sélectionnées dans la liste des ;
ondes radio, micro-ondes, rayonnement infrarouge, lumière visible, radar, rayonnement ultraviolet, rayons X et rayons gamma, laser.

5. Barre de remorquage selon l'une quelconque des revendications précédentes, dans laquelle ledit composant pouvant être raccordé à une barre de remorquage est un crochet de remorquage détachable (11) et ladite partie de ladite barre de remorquage (16) est une partie de réception de crochet de remorquage (17).

6. Barre de remorquage selon l'une quelconque des revendications précédentes, dans laquelle ledit composant pouvant être raccordé à une barre de remorquage est une fiche (11') et ladite partie de ladite barre de remorquage (16) est une douille (18).

7. Barre de remorquage selon l'une quelconque des revendications précédentes, dans laquelle ledit dispositif d'émission d'ondes (25, 26) est connecté de manière fonctionnelle à, et agencé pour être activé par, un capteur de lumière, un capteur de son, un capteur de mouvement, un bouton ou un interrupteur électronique manuel similaire, une télécommande, un accéléromètre, un capteur de cliquetis, un appareil de communication mobile.

8. Barre de remorquage selon l'une quelconque des revendications précédentes, dans laquelle ledit dispositif d'émission d'ondes (25, 26) est agencé pour émettre une lumière visible ayant un motif sélectionné, ledit motif sélectionné étant de préférence un ou plusieurs sélectionnés dans la liste suivante ;
une forme polygonale telle qu'un triangle, un carré, un rectangle, un pentagone, un hexagone ou similaire, une flèche, une forme représentant un bouchon, un cercle tel qu'un cercle ou un anneau rempli, une ligne, ou leurs combinaisons.

9. Barre de remorquage (16) selon la revendication 8, dans laquelle ledit motif sélectionné est sélectionné de manière à correspondre à une forme ou à un motif sur ledit composant pouvant être raccordé à une barre de remorquage (11, 11').

10. Barre de remorquage selon l'une quelconque des revendications précédentes, dans laquelle ladite barre de remorquage (16) comprend au moins un premier et un second dispositif d'émission d'ondes (25, 26).

11. Barre de remorquage (16) selon la revendication 10, dans laquelle ledit premier dispositif d'émission d'ondes (25) est agencé pour émettre une lumière visible ayant un premier motif sélectionné, et ledit second dispositif d'émission d'ondes (26) est agencé pour émettre une lumière visible ayant un second motif sélectionné, dans lequel lesdits premier et second motifs sélectionnés sont différents l'un de l'autre en termes de forme, de taille et/ou de couleur.

12. Barre de remorquage (16) selon l'une quelconque des revendications précédentes, dans laquelle ledit dispositif d'émission d'ondes (25, 26) est de manière fonctionnelle connecté à une unité de commande électronique (ECU).

13. Barre de remorquage (16) selon la revendication 12, dans laquelle ladite unité de commande électronique (ECU) est agencée pour commander le temps pendant lequel ledit au moins un dispositif d'émission d'ondes (25, 26) est actif.

14. Crochet de remorquage (11) pour une barre de remorquage (16), ledit crochet de remorquage (11) comprenant une partie de raccord de barre de remorquage (13) pouvant être raccordée à une barre de remorquage (16) et une partie de raccord d'objet remorquable (12) pouvant être raccordée à un objet remorquable, dans lequel ledit crochet de remorquage (11) comprend au moins un dispositif d'émission d'ondes (25'), **caractérisé en ce que** ledit dispositif d'émission d'ondes (25') est configuré pour émettre une onde mécanique et/ou électromagnétique lors de l'activation pour guider un utilisateur à trouver une partie de réception de crochet de remorquage (17) de ladite barre de remorquage (16) pendant l'assemblage dudit crochet de remorquage (11) avec ladite partie de ladite barre de remorquage (16), ledit au moins un dispositif d'émission d'ondes (25') étant un émetteur laser adapté pour projeter un faisceau laser (21').

15. Procédé destiné à guider un utilisateur à trouver une partie d'une barre de remorquage (16), telle qu'une douille (18) pour une fiche, une partie de réception de crochet de remorquage (17) ou un accouplement d'accessoire non remorquable, lors de l'assemblage d'un composant pouvant être raccordé à une barre de remorquage (11, 11'), tel qu'un crochet de remorquage (11), un adaptateur, un crochet de non remorquage ou une fiche (11'), par exemple une prise électrique, avec ladite partie d'une barre de remorquage (16) pour un véhicule, comprenant les étapes consistant à ;
a) émettre une onde mécanique et/ou électromagnétique par l'intermédiaire d'un dispositif d'émission d'ondes (25, 26, 25'), ledit au moins un dispositif d'émission d'ondes (25, 26) étant compris dans ladite barre de remorquage (16), et ;
b) utiliser ladite onde mécanique et/ou électromagnétique émise pour guider ledit composant pouvant être raccordé à une barre de remorquage (11, 11') vers ladite partie de ladite barre de remorquage (16).

16. Procédé selon la revendication 15, dans lequel ledit composant pouvant être raccordé à une barre de remorquage (11, 11') est un crochet de remorquage (11) et/ou un bouchon (11').

17. Procédé selon l'une quelconque des revendications 15 à 16, dans lequel ledit dispositif d'émission d'ondes (25, 26, 25') est activé par un signal d'entrée provenant d'un capteur de lumière, d'un capteur de son, d'un capteur de mouvement, d'un bouton ou d'un commutateur électronique manuel similaire, d'une télécommande, d'un accéléromètre, d'un capteur de cognement, d'un appareil de communication mobile ou de leurs combinaisons.

18. Procédé selon l'une quelconque des revendications 15 à 17, dans lequel ledit dispositif d'émission d'ondes (25, 26) est désactivé après que ledit composant pouvant être raccordé à une barre de remorquage (11, 11') se soit apparié avec ladite barre de remorquage (16).

19. Procédé selon l'une quelconque des revendications 15 à 18, dans lequel ledit dispositif d'émission d'ondes (25, 26, 25') est agencé pour indiquer quand ledit composant pouvant être raccordé à une barre de remorquage (11, 11') est apparié avec ladite barre de remorquage (16).

20. Procédé selon l'une quelconque des revendications 15 à 19, dans lequel ledit dispositif d'émission d'ondes (25, 26, 25') est agencé pour indiquer si ledit composant pouvant être raccordé à une barre de remorquage (11, 11') est incorrectement apparié.
